# DEMANDE DE BREVET EUROPEEN

(11) **EP 1 174 202 A1**
(43) Date de publication de la demande: **23.01.2002**
(21) Numéro de dépôt: 01401894.9
(22) Date de dépôt: 13.07.2001
(51) Int. Cl.: B23B 31/16, B23B 31/22

(54) **Mors à proéminence hémisphérique**

(30) Priorité: 17.07.2000 FR 0009343
(71) Demandeur: Gallion, François, 21490 Varois et Chaignot (FR)
(72) Inventeur: Gallion, François, 21490 Varois et Chaignot (FR)

(57) **Abrégé**

L'invention concerne des mors destinés à serrer des pièces sur un étau, mandrin ou plateau de machine-outil. Ces mors laissent dans l'élément serré des empreintes tolérables qu'il n'est pas nécessaire d'éliminer. Ils limitent les déformations.

La partie en contact avec l'élément serrant (1) est identique aux mors auxquels ils se substituent et la partie en contact avec l'élément à serrer (2) présente une proéminence (3) hémisphérique à l'extrémité (4) qui laisse dans la pièce une empreinte sans arrête vive ce qui limite les contraintes et évite les amorces de rupture. Chaque mors, par rapport à son axe de rotation, peut présenter une ou plusieurs proéminences disposées sur un même diamètre, sur une même génératrice, ni sur un même diamètre ni sur une même génératrice. Ces éléments peuvent être amovibles et interchangeables.

Cette invention est destinée au serrage de toutes les pièces et plus particulièrement les roues des matériels ferroviaires lors de leur reprofilage.

## Description

La présente invention concerne les mors des tours à reprofiler les roues des matériels ferroviaires.

Les roues des matériels ferroviaires sont des organes de sécurité. A ce titre il n'est toléré aucune amorce de rupture sur ces pièces. Ces prescriptions sont reprises dans les documents de maintenance qui concernent ces organes.

Lors de la fabrication des roues, les industriels utilisent un type de mors qui laisse dans la roue une empreinte oblongue et arrondie qui, sous certaines conditions de position et de valeurs, peut être laissée en l'état car elle ne présente pas d'amorce de rupture.

Au cours de sa vie, la roue doit être reprofilée dans des ateliers de maintenance c'est à dire que son profil doit être usiné sur un tour. Cette opération se fait sur un essieu monté constitué d'un axe et deux roues. Les mors équipants les plateaux des tours à reprofiler présentent des arrêtes vives qui s'accrochent dans la roue pour permettre son entraînement sans glissement. L'inconvénient est que ces mors laissent dans la roue des empreintes qui sont des amorces de rupture et qu'il est indispensable d'éliminer par meulage manuel. Ces travaux supplémentaires sont coûteux et engendrent également de la pollution sonore et atmosphérique et dégradent les conditions de travail.

Ces mors sont à arrêtes vives pour les raisons suivantes :
- l'effort d'entraînement de la roue est important lors de l'usinage au niveau de la table de roulement écrouie et déformée,
- la roue, à l'emplacement de contact avec le mors, peut présenter un état de surface brut, de l'oxydation, de la pollution, de la graisse,
- les mors utilisés par les fabricants de roues sont inefficaces lors des reprofilages en maintenance. Ils présentent une surface de contact importante entre mors et roue. Pour entraîner la roue et éviter le glissement, ces mors doivent fonctionner sous un effort de serrage important. La roue étant neuve celle-ci ne se déforme pas car l'épaisseur de la jante est maximale. En maintenance l'épaisseur de la jante a diminué du fait de l'usure et des reprofilages successifs. Un effort de serrage important donne du faux-rond à la roue ou une forme légèrement triangulaire après usinage sur un tour équipé d'un plateau 3 mors, ce qui n'est pas tolérable. Un effort de serrage réduit permet le glissement et le décrochage entre mors et roue.

Les nombreux essais de mors effectués en maintenance jusqu'à ce jour ont tous eu pour conclusion :
- soit glissement et décrochage entre mors et roue,
- soit entraînement de la roue mais création d'empreintes qui génèrent des amorces de rupture et qu'il faut éliminer.

Les mors faisant l'objet de cette invention permettent d'entraîner la roue sans glissement entre mors et roue, et de laisser dans la roue des empreintes tolérables au niveau des contraintes résiduelles, de l'état de surface et des amorces de rupture. Ils permettent de réduire l'effort de serrage sur la pièce et d'en limiter les déformations

Les dessins annexés illustrent l'invention;
La figure 1 représente en vue de face et en vue de droite un exemple de mors
La figure 2 représente une des variantes de ce mors

Ces mors selon l'invention sont:
- au niveau de l'interface mors / machine (1), en tous points identiques aux mors actuels auxquels ils peuvent se substituer. Ils peuvent aussi faire partie intégrante d'un ensemble plus complexe
- au niveau de l'interface mors / pièce (2) à serrer, ils présentent une ou plusieurs proéminences (3) hémisphériques à l'extrémité (4) qui viennent en lieu et place des arrêtes vives sur les mors actuels. C'est cette partie hémisphérique qui vient en contact avec la roue et laisse dans celle-ci une empreinte hémisphérique qui ne présente pas d'amorce de rupture.

La dureté et le rayon de l'extrémité hémisphérique de ces proéminences sont à adapter en fonction de :
- l'effort de serrage appliqué sur les mors,
- la nature et la dureté de la pièce à serrer,
- les efforts d'entraînement à transmettre,
- l'empreinte maximale tolérée dans l'élément à serrer.

Pour des mors constitués de plusieurs proéminences hémisphériques, par rapport à l'axe de rotation du plateau ou du mandrin, elles peuvent se trouver sur un même diamètre, sur une même génératrice, ni sur un même diamètre ni sur une même génératrice.

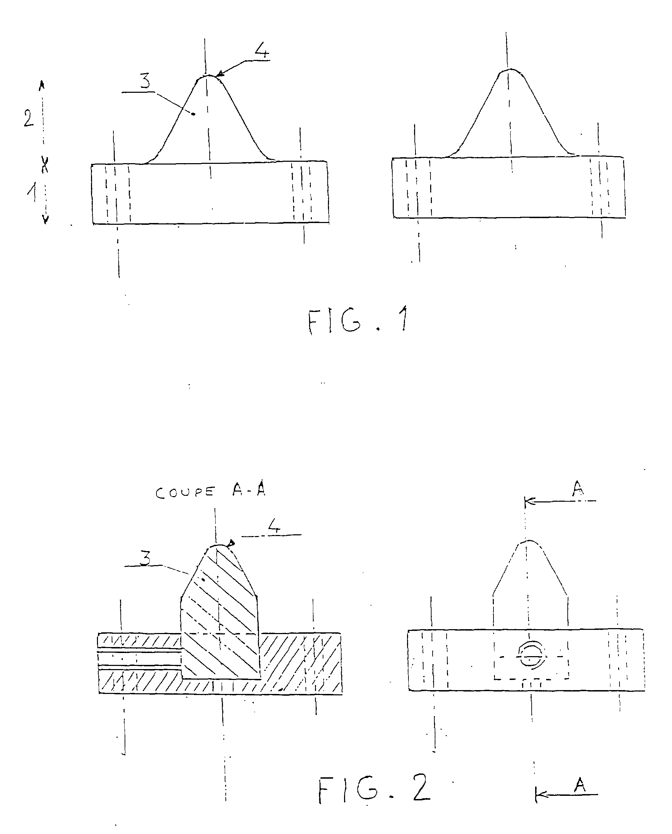

Les parties proéminentes peuvent être amovibles et interchangeables (figure 2), leurs fixations étant réalisées par des moyens mécaniques conventionnels tel que vis, écrous, goupilles, clipsage, etc..., par magnétisme ou par collage.

Selon une variante non illustrée, l'extrémité hémisphérique peut être remplacée par une extrémité arrondie constituée de plusieurs rayons de valeurs différentes

Selon une autre variante non illustrée, l'extrémité hémisphérique peut être une bille identique à celle des roulements. Elle est fixée à une proéminence du mors par magnétisme, par collage ou par un moyen mécanique tel que sertissage, clipsage ...

Ces mors sont tout à fait adaptés dans le domaine ferroviaire pour le reprofilage de roues usées mais aussi pour l'usinage de roues neuves ou de toutes autres pièces nécessitant à la fois :
- des efforts d'entraînement importants,
- des déformations réduites au strict minimum de la pièce serrée,
- des empreintes de mors résiduelles tolérables et sans amorce de rupture.

A titre d'exemple non limitatif, chaque plateau d'un tour à reprofiler les roues des essieux de chemin de fer peut être équipé de 2 ou 3 mors comportant chacun 2 proéminences amovibles et interchangeables placées sur un même diamètre par rapport à l'axe de rotation, en acier traité thermiquement ayant une dureté HRC 52, dont l'extrémité hémisphérique à un rayon de 3 mm.

## Revendications

1. Mors de serrage qui, sur un étau, mandrin ou plateau de machine-outil, entre en contact avec l'élément à serrer, **caractérisé par** une interface mors/machine (1) identique au mors auquel il se substitue et qui présente à l'interface mors/pièce à serrer (2) une proéminence (3) hémisphérique à son extrémité (4) qui entre en contact avec l'élément à serrer, et qui permet son entraînement en laissant dans celui-ci une empreinte identique à sa forme.

2. Mors selon la revendication 1 **caractérisé par** une proéminence (3) dont l'extrémité (4) arrondie est constituée d'une succession de rayons de valeurs différentes.

3. Mors selon la revendication 1 **caractérisé par** une proéminence (3) dont l'extrémité (4) est une bille fixée mécaniquement, magnétiquement ou par collage.

4. Mors selon la revendication 1 ou la revendication 2 ou la revendication 3 **caractérisé par** plusieurs proéminences (3) sur un même mors, placées sur un plan diamétral par rapport à son axe de rotation.

5. Mors selon la revendication 1 ou la revendication 2 ou la revendication 3 **caractérisé par** plusieurs proéminences (3) sur un même mors, placées sur une même génératrice par rapport à son axe de rotation.

6. Mors selon la revendication 1 ou la revendication 2 ou la revendication 3 **caractérisé par** plusieurs proéminences (3) sur un même mors, placées ni sur une même génératrice ni sur un même diamètre par rapport à son axe de rotation.

7. Mors selon l'une quelconque des revendications précédentes **caractérisé par** la partie proéminente (3) amovible et interchangeable fixée par des moyens mécaniques conventionnels, par magnétisme ou par collage.
